Europäisches Patentamt

European Patent Office

Office européen des brevets

(19)

(11) Numéro de publication : **0 468 920 A1**

## (12) DEMANDE DE BREVET EUROPEEN

(21) Numéro de dépôt : **91810531.3**

(22) Date de dépôt : **05.07.91**

(51) Int. Cl.$^5$ : **H02P 8/00,** B60Q 1/08, B60Q 1/06

(30) Priorité : **26.07.90 CH 486/90**

(43) Date de publication de la demande :
**29.01.92 Bulletin 92/05**

(84) Etats contractants désignés :
**CH DE ES FR GB IT LI NL SE**

(71) Demandeur : **SAIA AG**
**Bahnhofstrasse 18**
**CH-3280 Murten (CH)**

(72) Inventeur : **Sieber, Edmond**
**CH-1582 Donatyre (CA)**

(74) Mandataire : **AMMANN**
**INGENIEURS-CONSEILS EN PROPRIETE**
**INTELLECTUELLE SA BERNE**
**Schwarztorstrasse 31**
**CH-3001 Berne (CH)**

(54) **Dispositif de positionnement.**

(57)   Le dispositif de positionnement (1) d'éléments, notamment de phares de voiture, comprend un moteur pas-à-pas (12) piloté par une commande permettant la détection de perte de pas. Toute perte de pas, en phase du positionnement, c'est-à-dire lorsqu'une position déterminée est commandée, conduit automatiquement l'arbre d'entraînement de l'élément en position de butée pour que soit effectuée une réinitialisation au moyen d'une électronique de réglage en boucle ouverte. Après cette réinitialisation ou ce recalibrage, le positionnement déterminé est à nouveau tenté. L'erreur de positionnement engendrée par la perte de pas, laquelle est conséquenté chaque fois que l'arbre d'entraînement vient contre une butée, est divisée grâce à une réduction i, de sorte que l'erreur résultante lors d'un positionnement est toujours sensiblement inférieure à 0,1 mm.

EP 0 468 920 A1

FIG.2

La présente invention a pour objet un dispositif de positionnement d'au moins un élément qui peut occuper différentes positions déterminées entre deux positions extrêmes, ledit élément étant relié à un arbre d'entraînement entraîné par un moteur pas-à-pas.

Certains dispositifs de ce genre comprennent différents organes mécaniques dont certains doivent être montés en observant un jeu axial n'excédant pas une limite imposée préalablement, afin que leur fonctionnement soit conforme aux critères de qualité requis quant à la précision et à la fiabilité de cette précision. Aussi, la présente invention a-t-elle également pour objet un procédé de réglage d'un tel jeu.

De tels dispositifs peuvent être mis en oeuvre dans les domaines les plus divers où des critères techniques du même ordre sont exigés. Une application privilégiée est donnée par le positionnement des optiques ou phares d'une voiture.

Le positionnement des optiques d'une voiture peut être effectué de différentes manières. A l'heure actuelle (en faisant abstraction des dispositifs purement mécaniques), on met en oeuvre le plus souvent un moteur à courant continu. Un potentiomètre donne à la commande la position de l'arbre d'entraînement (qui, dans ce type d'application est déplaçable axialement) c'est-à-dire l'indication du point où se trouve celui-ci à un moment donné. Le maintien de cette position ou le déplacement de l'arbre vers une autre position déterminée se fera en fonction du signal donné. Il s'agit donc d'une commande à type analogique fonctionnant en boucle fermée.

On constate que les entraînements par moteur à courant continu ne donnent pas satisfaction.

En premier lieu, on se heurte avec ces-dispositifs connus à un problème de compatibilité eu égard à l'utilisation croissante de commandes digitalisées. Par ailleurs, il est souhaitable que le dispositif de positionnement puisse être relié à un microprocesseur, ce qui n'est pas aisé avec un moteur à courant continu.

En second lieu, on relève que le potentionmètre est soumis à une usure très importante et que l'altération de son fonctionnement est de plus accélérée par les conditions environnantes d'utilisation (plage de température élevées). Pour ces raisons, la précision du positionnement n'est pas assurée, en dépit d'une réduction mécanique prévue sur la plupart des dispositifs connus.

La demande EP-A-0 340 735 divulgue un dispositif de réglage de l'inclinaison d'un projecteur de voiture, c'est-à-dire du faisceau de lumière, ce réglage faisant intervenir un moteur pas-à-pas dont le sens de rotation et le nombre de tours sont fonctions de signaux reçus d'un capteur optique à cinq éléments $E_1...E_5$, par l'intermédiaire d'un microprocesseur et d'un circuit de commande. Cependant, aucun moyen n'est décrit ou suggéré pour un éventuel repositionnement du faisceau optique, ni pour le rattrapage du jeu axial.

EP 0 182 774 en revanche expose le problème de la correction de la position de l'organe à régler, correction nécessaire suite à la perte de pas du moteur pas-à-pas. La solution proposée consiste ici à fournir momentanémment un courant moteur supérieur déterminé lorsque l'on constate que le nombre de pas à effectuer et celui réalisé effectivement ne correspondent plus.

Cette solution présente, entre autres, l'inconvénient de créer des sollicitations excessives du moteur pas-à-pas, en fonction de l'ampleur de l'obstacle à franchir rendant nécessaire la correction, et d'engendrer ainsi, prématurément, des désordres dans le moteur pas-à-pas, alors même que l'on peut s'attendre à ce que la position voulue ne soit tout de même pas atteinte, ou bien atteinte avec une telle erreur que l'interet du système est battu en brèche.

Le problème de fiabilité des dispositifs de positionnement, ainsi que, surtout, celui de leur précision de fonctionnement demeurent donc entiers. En effet, il est fondamental, à partir du moment où le moteur est mis en action pour amener un phare de voiture d'une position "1" à une position "2", que cette dernière soit effectivement occupée par le phare et cela dans une limite de tolérance très étroite et indépendamment des conditions environnantes d'utilisation. Dans l'application privilégiée du positionnement des phares de voiture, l'erreur absolue ne devrait jamais excéder 0,1 mm. Ensuite, il est nécessaire que le positionnement ainsi effectué soit maintenu, en dépit des contraintes extérieures, sous peine de mettre à néant au moins une partie de l'avantage obtenu par un positionnement relativement précis. Ce problème trouve donc son prolongement dans la question que pose la précision du jeu axial. Toujours dans le domaine d'application considéré, ce jeu ne doit pas excéder 0,05 mm.

Le but de la présente invention est de pallier les inconvénients constatés sur les dispositifs connus et de proposer des solutions aux problèmes exposés, en réalisant un dispositif de positionnement fiable et de qualité. Ce but est atteint grâce aux caractéristiques définies dans les revendications.

Avec le dispositif selon l'invention, incorporant un détecteur de perte de synchronisme décrit dans la demande de brevet suisse no 1 980/90 de la déposante, la position de l'arbre d'entraînement, dans ce cas également déplaçable axialement, est connue indirectement par la comptabilisation des pas. Lorsqu'un arrêt intempestif consistant en une butée accidentelle survient, la comptabilisation des pas s'arrête également, le défaut de positionnement est signalé par la détection de perte de pas, l'arbre d'entraînement revenant alors en butée arrière pour réinitialiser le comptage. On opère ainsi un réglage en boucle ouverte, aucun élément physique - comme un potentionmètre, ou un dispositif de réponse quelconque - n'étant nécessaire pour donner la position de l'arbre.

Le dispositif selon l'invention allie ainsi les avantages d'un coût réduit aux résultats de précision et de fiabilité.

On va décrire maintenant deux formes d'exécution, non limitatives, du dispositif selon l'invention, à l'appui du dessin annexé dans lequel:

la figure 1 représente schématiquement le dispositif appliqué au réglage du positionnement d'optiques d'une voiture,

la figure 2 est une coupe du dispositif le long de son plan de symétrie, selon une première forme d'exécution,

la figure 3 est une représentation de détail d'une partie de la figure 2,

la figure 4 est un schéma explicatif de positionnage,

la figure 5 est une coupe du dispositif le long de son plan de symétrie, selon une deuxième forme d'exécution.

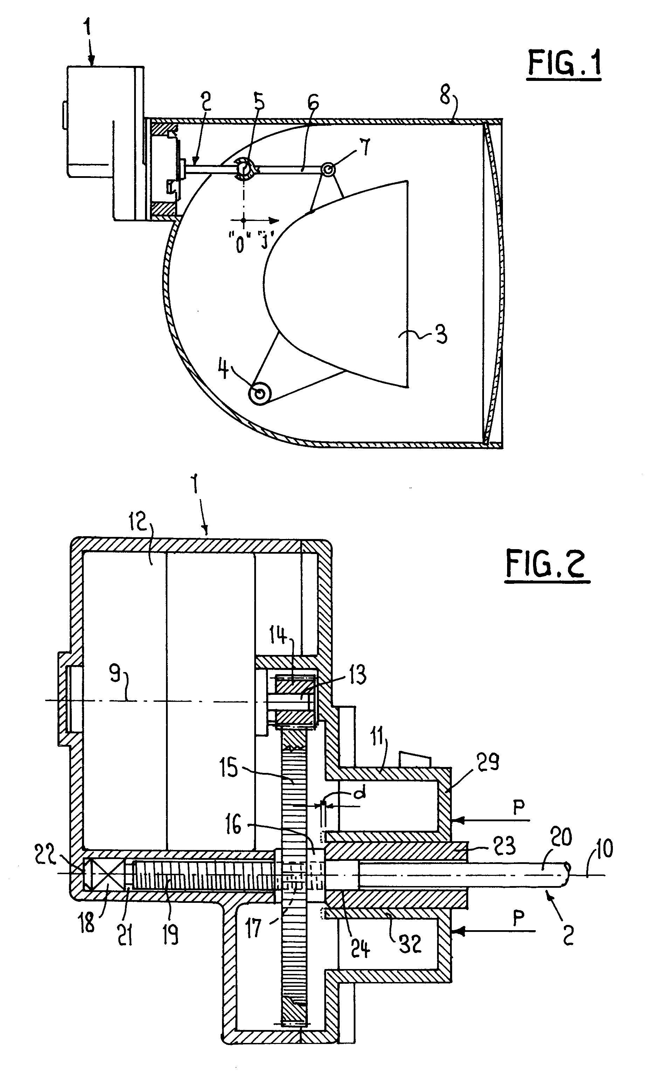

Dans la figure 1, on voit le dispositif de positionnement 1 mis en oeuvre pour le réglage d'une optique de voiture 3 placé dans son carter de protection 8. Cet optique est montée pivotable autour d'un axe 4. L'arbre d'entraînement 2 du dispositif 1 est relié au palier d'articulation 7 par l'intermédiaire d'un accouplement sphérique 5 et d'une tige d'actionnement 6. Selon la charge du véhicule, c'est-à-dire de son assiette et de l'inclinaison axiale que prendra celle-ci et dont les données sont "lues" par exemple par des capteurs non représentés, la position de l'optique sera automatiquement corrigée par l'intermédiaire d'une commande également non représentée. En fonction de l'information reçue, l'arbre 2 se déplacera axialement soit vers la droite (sur la figure 1), (c'est-à-dire exerçant un mouvement de translation vers l'extérieur), soit vers la gauche (c'est-à-dire exerçant un mouvement de translation vers l'intérieur), faisant ainsi basculer l'optique 3 autour de l'axe 4 dans la position requise pour un faisceau correctement dirigé. Selon une variante moins sophistiquée, on peut prévoir que la commande du dispositif soit actionnée manuellement par le conducteur au moyen d'un bouton-sélecteur sur le tableau de bord.

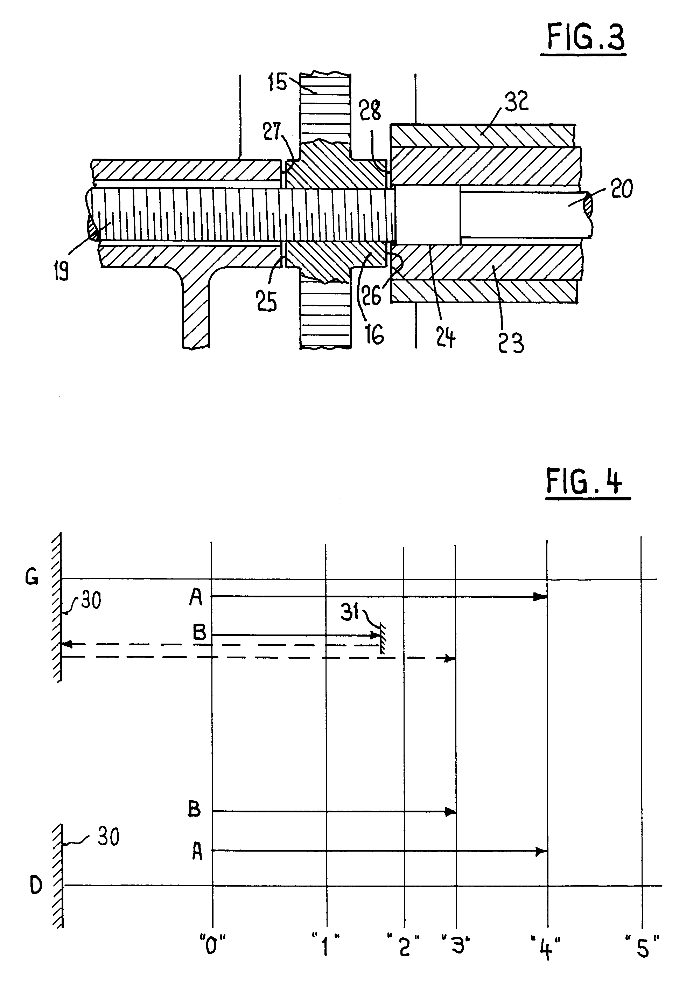

Les moyens de l'invention solutionnant les problèmes exposés vont être décrits à l'appui des figures 2 et 4.

Le dispositif présente deux étages, soit l'étage-moteur d'axe 9 et l'étage d'entraînement d'axe 10, dont les éléments constitutifs sont agencés dans un boîtier couvercle 11.

L'étage-moteur comprend l'actuateur ou le moteur pas-à-pas 12, d'où se dégage l'arbre de rotor 13 sur lequel est monté, lié en rotation et en translation, un pignon 14 formant le premier élément d'une réduction. De plus, ainsi qu'on le verra, il est impératif que le moteur pas-à-pas 12 - de préférence de type réversible - soit commandé par une commande électronique comportant un système de détection de perte de pas. Cette commande connue en soi n'est pas représentée.

L'étage d'entraînement comprend une roue 15, formant le second élément de réduction - le rapport de réduction étant i - en prise avec le pignon 14. Le moyeu 16 de la roue présente un alésage taraudé 17. Cette roue est montée sur la partie filetée 19 de l'arbre d'entraînement 2. Ce dernier est lié en rotation au moyen de l'extrémité 18 présentant une section carrée et guidée dans un logement 21 du boîtier 11, le fond 22 de ce logement constituant, dans cette forme d'exécution, la butée arrière stoppant le déplacement axial de l'arbre 2. Celui-ci est supporté d'un côté du moyeu 16 par le logement 21 abritant l'extrémité 18 et, de l'autre côté du moyeu, par une douille 23 supportant la partie 24 de l'arbre. L'arbre 2 comprend enfin la partie de sortie 20 se dégageant de la douille 23 et rejoignant l'accouplement sphérique 5 non représenté sur cette figure. La douille 23 est elle-même montée solidaire (comme on le verra plus loin) dans une portée 32 du boîtier 11. L'écart entre, d'une part, la face 27 du logement 21 en regard à la face 25 du moyeu 16 et, d'autre part, la face 28 de la douille 23 en regard à la face 26 du moyeu 16 correspond, avec un léger jeu fonctionnel, comme il sera expliqué plus loin, à l'épaisseur dudit moyeu (Figure 3).

Le fonctionnement du dispositif dont on rappelle que le moteur pas-à-pas est commandé par une commande électronique comportant un système de détection de perte de pas, est le suivant (fig. 1, 2 et 4): Selon l'exemple illustré en figure 4, qui symbolise un dispositif (G) et un dispositif (D) accouplé respectivement au phare de gauche et au phare de droite d'une voiture, les positions prédéterminées, concrétisées par exemple par l'accouplement sphérique, sont marquées par "0", "1", "2", "3", "4" et "5" (positions symbolisées par "0" et "j" sur la figure 1). Ces positions correspondent à des charges déterminées du véhicule, ainsi qu'on l'a vu plus haut.

Dans un premier cas de figure, on suppose que l'on doive passer de la position "0" (ou position "normale") à la position "4" (flèches A sur la figure 4). Lorsque le moteur pas-à-pas 12 est mis en action, la roue 15 sera entraînée en rotation. Le moyeu 16 taraudé et la partie 19 filetée de l'arbre 2, lié en rotation, constituent un système vis-écrou (17, 19) de sorte que l'arbre sera soumis à un déplacement axial de la position de départ "0" à la position choisie "4". Abstraction faite du problème du jeu axial, ce cas de figure ne soulève aucune difficulté quant à la précision du positionnement, les inconvénients engendrés par les potentiomètres étant, par ailleurs, dans le dispositif selon la présente invention, éliminés. La difficulté que peut soulever le positionnement se rencontrera lorsque l'avancement ou le recul de l'arbre est bloqué ou grippé par une cause externe (par exemple givrage d'eau de condensation en hiver, ou après initialisation volontaire (mise à zéro) consistant à amener le moteur pas-à-pas en butée arrière référencée de manière générale 30 (et correspondant à la référence 22 de la figure 2)). Sur la figure 4, les flèches B illustrent un cas dans lequel, après avoir sélectionné la position "3", seul le dispositif de droite (D) prend cette position, tandis que le dispositif de gauche (G) est bloqué entre les positions "1" et "2", ce qui correspond à une butée accidentelle 31. Alors qu'en fonctionnement normal, c'est-à-dire sans incident de parcours, le nombre de pas est comptabilisé, toute butée accidentelle (tout comme d'ailleurs la butée arrière de reinitialisation) entraîne une perte de pas dont le nombre, lui, n'est pas comptabilisé, donc pas connu.

On comprendra, à l'aide de l'exemple de mise à zéro, c'est-à-dire lorsque l'arbre 2 est amené contre la butée arrière 30, le fonctionnement du dispositif en boucle ouverte, et que la précision du positionnement et de sa fiabilité, grâce aux moyens selon l'invention, sont assurés. A ce moment, le rotor a encore des impulsions, sans qu'il y ait toutefois rotation. De fait, toute butée peut rejeter le moteur pas-à-pas "en arrière" d'un ou plusieurs cycles électriques précédents, soit de quatre pas ou un multiple de quatre pas (ce nombre étant fonction de l'élasticité de la butée). Ainsi qu'on l'a dit, les pas perdus au cours de cette phase ne sont pas comptabilisés par la commande électronique. Les essais, mesures et exploitations de ces mesures ont montré que dans la quasi-totalité des cas, le nombre de pas perdus n'excédait pas huit.

Si, à partir de la butée 30, on effectue par exemple 50 pas vers l'avant pour atteindre la position "0", le nombre réel de pas n'est pas connu (le nombre de pas réel peut être, par exemple de quarante-six (si en butée, le saut était d'un cycle de 4 pas)). Or la résolution $\underline{r}$, définie comme étant le déplacement axial de l'arbre - sans réduction - correspondant à un pas-moteur, est égale à

$$\frac{\alpha}{360}$$

x p, où $\alpha$ est l'angle de pas du moteur et $\underline{p}$ le pas de vis du système vis-écrou. Pour un choix de valeurs de $\alpha$ = 15 et de p = 0,8 mm, on aura r = 0,033 mm par pas moteur. Dans l'hypothèse d'une perte de huit pas, l'erreur résultante sera donc de 0,264 mm, erreur nettement supérieure au seuil fixé, pour ce domaine d'application, à 0,1 mm. La réduction permettra de diviser cette erreur, de sorte que ledit seuil ne soit pas dépassé. Dans l'exemple, on déduit qu'un rapport de réduction égal à trois s'avèrerait suffisant. Celui-ci sera plus grand si le nombre de pas non maîtrisable avec la commande est supérieur à huit. En pratique, les essais ont permis de constater qu'avec une réduction de valeur i = 6, un facteur de sécurité relativement important étant appliqué, l'erreur de positionnement était toujours très largement inférieure à 0,1 mm, soit, en erreur relative, moins de 1 % pour une course de 10 mm.

Le raisonnement analogue s'applique lorsque survient un arrêt accidentel 31. Dans ce cas, puisqu'il y a perte de pas, le défaut de positionnement est signalé par la détection de perte de pas et l'arbre 2 retournera en butée arrière pour reinitialiser, puis se dirigera dans la position commandée qui, si l'arrêt en 31 ne se reproduit plus, sera atteinte avec au moins la précision requise.

Si l'arrêt accidentel devait se reproduire plusieurs fois de suite, par exemple après cinq essais, et que l'arbre reste à chaque fois arrêté avant d'atteindre la position commandée, un signal, par exemple optique ou/et acoustique, fournira une information au conducteur sur la défectuosité du dispositif.

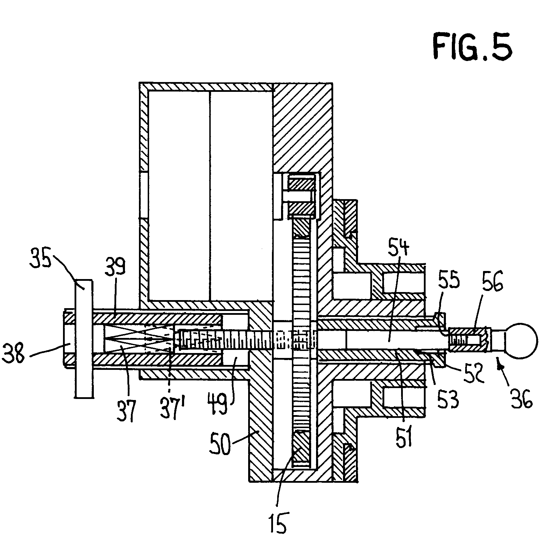

Sur la figure 5, on aperçoit une deuxième forme d'exécution sur laquelle un réglage manuel de mise à zéro est prévu à l'arrière de l'étage d'entraînement. Ce réglage manuel permet d'adapter le dispositif de positionnement à divers types de phares et d'effectuer, le cas échéant, une correction qui peut s'avérer nécessaire, périodiquement ou ponctuellement. Selon cette forme d'exécution, l'arbre d'entraînement 36 présente à son extrémité arrière une section polygonale 37 ajustable axialement sur une distance souhaitée (une position différente 37' est représentée à titre d'exemple en traits pointillés) dans l'évidement 38 d'une bague filetée 39 vissée dans l'évidement taraudé du boîtier 50, le pas de vis étant identique au pas de vis du système vis-écrou (17, 19). Bien entendu, il faut que le frottement des filets de la bague 39 dans le taraudage correspondant soit supérieur au frottement du système vis-écrou. La bague filetée 39 produit, lorsqu' elle est manoeuvrée en rotation grâce à une goupille 35, un déplacement axial de l'arbre d'entraînement 36 correspondant au déplacement axial de la bague filetée 39 elle-même. Ainsi l'arbre d'entraînement 36, associé à la butée axiale arrière (c'est-à-dire du polygone 37 sur la goupille 35), peut prendre une position initiale adaptée au type de phare considéré. En lieu et place d'une goupille, on peut bien entendu prévoir tout autre élément de manoeuvre.

Le dispositif a été décrit sur la base d'un exemple où l'arbre d'entraînement de l'élément à positionner est soumis à un déplacement axial, l'élément lui-même, c'est-à-dire le phare de voiture, étant d'ailleurs soumis à un mouvement de pivotement autour de l'axe 4 (figure 1). Mais on comprend que la mise en oeuvre du dispositif selon l'invention n'est pas limitée au seul positionnement axial de l'organe entraîné, mais s'étend bien sûr aux possibilités de positionnement angulaire de ce dernier par l'intermédiaire notamment d'un train d'engrenages.

Appliqué au positionnement axial de l'arbre d'entraînement, une partie des avantages atteints par la précision du positionnement serait altérée si le déplacement de l'arbre 2 était affecté d'un jeu axial qui, s'il doit exister, ne doit pas être trop important et rester constant. Notamment dans le domaine d'application du réglage des phares de voiture, la non-maîtrise du jeu axial entraînerait des oscillations quasiment ininterrompues du faisceau, situation dont on imagine le désagrément.

En se reportant aux figures 2 et 3, nous observons que si les faces 25, 26 du moyeu 16 de la roue 15 sont en contact avec les faces 27 et 28 respectivement, suite au simple montage de la douille 23 (par exemple par chassage dans la portée 32 du boîtier), des forces de frottement plus ou moins importantes devraient être vaincues par le moteur pas-à-pas. Les moteurs de faible puissance utilisés dans ces types de dispositifs ne seraient donc plus adaptés. Par ailleurs, l'utilisation de moteurs plus puissants aurait pour conséquence un renchérissement disproportionné de ces dispositifs.

La présente invention propose donc aussi un procédé permettant de limiter le jeu axial à 0,05 mm au maximum, étant entendu que l'application dudit procédé peut dépasser le seul cadre des dispositifs de positionnement.

Pour éviter le frottement, une pression P est exercée sur la partie frontale 29 du boîtier 11, la force étant transmise sur la portée 32, après que l'ensemble roue 15 et arbre 2 ait été monté. Puis la douille 23 est introduite jusqu'à ce que la face 28 vienne buter contre la face 26 du moyeu 16. La pression, dont la valeur sera fonction de la rigidité du matériau choisi pour le boîtier, provoquera un déplacement élastique d de la portée 32 vers l'intérieur du boîtier. On choisira la pression de telle sorte que d soit égal à 0,02 mm au maximum. La liaison fixe douille 23 - boîtier 11 est effectuée, alors que la pression est maintenue, de préférence par ultra-sons. Une fois cette liaison faite, la pression est relâchée de sorte que les parties 29, 32 reculent à nouveau d'une distance égale ou très approximativement égale à d, entraînant dans ce recul la douille 23 et libérant ainsi le moyeu de la roue, tout en limitant le jeu. Le jeu définitif sera ainsi de 0,02 mm augmenté du jeu des filets du système vis-écrou (17, 19), donc supérieur à 0,02 mm, mais en tout cas inférieur à 0,05 mm qui est la limite maximum du jeu à ne pas dépasser.

**Revendications**

1. Dispositif de positionnement d'au moins un élément qui peu occuper différentes positions déterminées entre deux positions extrêmes, ledit élément étant relié à un arbre d'entraînement entraîné par un moteur pas-à-pas (12), caractérisé en ce qu'il comprend des moyens de réinitialisation du comptage de pas, le moteur pas-à-pas (12) étant commandé par une commande en boucle ouverte.

2. Dispositif selon la revendication 1, caractérisé en ce que le défaut de positionnement est signalé par un dispositif de détection de perte de pas.

3. Dispositif selon la revendication 1 ou 2, caractérisé en ce que l'arbre d'entraînement (2) est en liaison avec un rotor (13) dudit moteur pas-à-pas par l'intermédiaire d'une réduction de rapport i.

4. Dispositif selon l'une des revendications 1 à 3, caractérisé en ce que la réinitialisation du comptage de pas est effectuée au moyen d'au moins une butée (30).

5. Dispositif selon la revendication 4, caractérisé en ce que au moins une butée est ajustable.

6. Dispositif selon l'une des revendications 1 à 5, caractérisé par un élément de manoeuvre (35) permettant un réglage de positionnement préalable ou ponctuel.

7. Dispositif selon l'une des revendications 1 à 6, caractérisé en ce que le non-positionnement est signalé après un nombre déterminé d'essais non réussis.

8. Dispositif selon l'une des revendications 1 à 7, caractérisé en ce que l'arbre d'entraînement est lié en rotation et déplaçable axialement, le mouvement rototif du rotor étant transformé en mouvement de translation au moyen d'un système vis-écrou, le déplacement pouvant s'effectuer sur une distance définie.

9. Dispositif selon la revendication 8, caractérisé en ce qu'il est formé d'un étage-moteur d'axe (9) comprenant le moteur pas-à-pas et un premier élément de réduction (14) monté sur l'arbre de sortie (13) du rotor, et d'un étage d'entraînement d'axe (10), comprenant un second élément de réduction (15) en prise avec le premier et l'arbre d'entraînement (2) présentant une partie filetée (19).

10. Dispositif selon la revendication 9, caractérisé en ce que le second élément de réduction est monté avec un jeu axial déterminé.

11. Elément, notamment phare de voiture, caractérisé en ce qu'il est positionné au moyen d'un dispositif selon l'une des revendications 1 à 10.

12. Procédé de montage du second élément de réduction (15) agencé dans le dispositif selon l'une des revendications 8 à 10 avec un jeu axial déterminé caractérisé en ce que
    a) la face (25) du moyeu (16) de la roue (15) est appuyée contre une face (27) limitant axialement le mouvement de translation de la roue dans un sens;

b) la face (28) d'une douille (23) limitant axialement le mouvement de translation de la roue (15) dans l'autre sens, laquelle douille est ajustée dans une portée (32), est appuyée contre la face (26) du moyeu;

c) une pression est exercée sur la portée (32) en direction du moyeu de la roue de manière à déplacer élastiquement ladite portée d'une distance $\underline{d}$;

d) la douille 23 et la portée (32) sont rendues solidaires;

e) la pression est relâchée après solidarisation de la douille (23) et de la portée (32).

13. Procédé selon la revendication 12, caractérisé en ce que le déplacement $\underline{d}$ est égal à 0,02 mm.

14. Procédé selon la revendication 12 ou 13, caractérisé en ce que la solidarisation est effectuée par ultra-sons.

FIG.1

FIG.2

## FIG.3

## FIG.4

FIG.5

Office européen
des brevets

**RAPPORT DE RECHERCHE EUROPEENNE**

Numero de la demande

EP    91 81 0531

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-340735 (NISSAN MOTOR CO.LTD)<br>* colonne 4, ligne 52 - colonne 5, ligne 53; figure 2 *<br>--- | 1, 8 | H02P8/00<br>B60Q1/08<br>B60Q1/06 |
| D,A | EP-A-182774 (VOEST-ALPINE-FRIEDMANN GES.MBH)<br>* abrégé; figure 1 *<br>--- | 1 | |
| A | WO-A-9007440 (ROBERT BOSCH GMBH)<br>* abrégé; figures 2, 3, 4 *<br>--- | 1-12 | |
| A | FR-A-2471883 (ROBERT BOSCH GMBH)<br>* le document en entier *<br>--- | 1, 8, 12 | |
| A | PATENT ABSTRACTS OF JAPAN<br>vol. 10, no. 231 (M-506)(2287) 12 août 1986,<br>& JP-A-61 064548 (KOITO MFG CO LTD) 02 avril 1986,<br>* le document en entier *<br>----- | 1, 12 | |

**DOMAINES TECHNIQUES RECHERCHES (Int. Cl.5)**

H02P
B60Q
H02K

Le présent rapport a été établi pour toutes les revendications

| Lieu de la recherche | Date d'achèvement de la recherche | Examinateur |
|---|---|---|
| LA HAYE | 04 SEPTEMBRE 1991 | BEYER F. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)

11